(19)

Europäisches
Patentamt
European
Patent Office
Office européen
des brevets

(11)  **EP 4 064 581 A1**

(12)  **EUROPEAN PATENT APPLICATION**

(43) Date of publication:
**28.09.2022  Bulletin 2022/39**

(21) Application number: **22157467.6**

(22) Date of filing: **18.02.2022**

(51) International Patent Classification (IPC):
*H04B 7/022* (2017.01)          *H04B 7/06* (2006.01)
*H04B 7/08* (2006.01)          *H04L 5/00* (2006.01)
*H04W 72/12* (2009.01)          *H04W 76/19* (2018.01)

(52) Cooperative Patent Classification (CPC):
**H04B 7/022; H04B 7/0695; H04B 7/088;
H04L 5/0035; H04L 5/0048; H04W 76/19**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2021  US 202117214269**

(71) Applicant: **Nokia Technologies Oy
02610 Espoo (FI)**

(72) Inventors:
• **KOSKELA, Timo
90670 Oulu (FI)**
• **LADDU, Keeth Saliya Jayasinghe
02140 Espoo (FI)**
• **TURTINEN, Samuli Heikki
91100 Ii (FI)**
• **YUK, Youngsoo
Seoul 06275 (KR)**

(74) Representative: **Nokia EPO representatives
Nokia Technologies Oy
Karakaari 7
02610 Espoo (FI)**

(54)  **MULTIPLE TRANSMISSION-RECEPTION POINT (M-TRP) OPERATION AFTER BEAM FAILURE RECOVERY (BFR)**

(57)  Systems, methods, apparatuses, and computer program products for multiple transmission-reception point (M-TRP) operation after beam failure recovery (BFR) are provided. One method may include determining, by a UE, that a beam failure detection (BFD) reference signal or signals (RS) associated with one or more beam failure detection resource sets has failed. The method may also include determining, by the UE, that it is not required to monitor a channel on at least one control resource set (CORESET) associated with an index value that is further associated with the one or more failed beam failure detection resource sets.

**EP 4 064 581 A1**

**Description**

FIELD:

Some example embodiments may generally relate to communications including mobile or wireless telecommunication systems, such as Long Term Evolution (LTE) or fifth generation (5G) radio access technology or new radio (NR) access technology, or other communications systems. For example, certain example embodiments may generally relate to systems and/or methods for multiple transmission-reception point (M-TRP) operation after beam failure recovery (BFR).

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

SUMMARY:

An embodiment is directed to a method including determining, by a user equipment, that a beam failure detection (BFD) reference signal or signals (RS) associated with one or more beam failure detection resource sets has failed. The method may also include determining, by the user equipment, that it is not required to monitor a channel on at least one control resource set (CORESET) associated with an index value that is further associated with one or more failed beam failure detection resource sets

An embodiment is directed to an apparatus that may include at least one processor and at least one memory comprising computer program code. The at least one memory and computer program code are configured, with the at least one processor, to cause the apparatus at least to: determine that a beam failure detection (BFD) reference signal or signals (RS) associated with one or more beam failure detection resource sets has failed, and to determine that the apparatus is not required to monitor a channel on at least one control resource set (CORESET) associated with an index value that is further associated with the one or more failed beam failure detection resource sets.

An embodiment is directed to an apparatus that may include means for determining that a beam failure detection (BFD) reference signal or signals (RS) associated with one or more beam failure detection resource sets has failed, and means for determining that the apparatus is not required to monitor a channel on at least one control resource set (CORESET) associated with an index value that is further associated with one or more failed beam failure detection resource sets.

An embodiment is directed to a non-transitory computer readable medium comprising program instructions for causing an apparatus to perform at least the following: determining that a beam failure detection (BFD) reference signal or signals (RS) associated with one or more beam failure detection resource sets has failed, and determining that the apparatus is not required to monitor a channel on at least one control resource set (CORESET) associated with an index value that is further associated with one or more failed beam failure detection resource sets.

BRIEF DESCRIPTION OF THE DRAWINGS:

For proper understanding of example embodiments, reference should be made to the accompanying drawings, wherein:

Fig. 1 illustrates an example beam failure recovery (BFR) medium access control (MAC) control element (CE) with one octet, according to an embodiment;
Fig. 2 illustrates an example of a M-TRP deployment, according to an embodiment;
Fig. 3 illustrates an example diagram of the reconfiguration of control resource sets (CORESETs), according to certain embodiments;
Fig. 4 illustrates an example flow diagram of a method, according to one embodiment;
Fig. 5A illustrates an example block diagram of an apparatus, according to an embodiment; and
Fig. 5B illustrates an example block diagram of an apparatus, according to an embodiment.

DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for multiple transmission-reception point (M-TRP) operation after beam failure recovery (BFR), is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Enhancements for the support of M-TRP deployment may include the identification of features to improve reliability and robustness for channels other than physical downlink shared channel (PDSCH), e.g., physical downlink control channel (PDCCH), physical uplink shared channel (PUSCH) and physical uplink control channel (PUCCH), using M-TRP and/or multi-panel. These enhancements may include support for M-TRP beam failure recovery (BFR).

In Release-16, the secondary cell (SCell) BFR was specified in 3GPP. In SCell BFR, the UE performs the beam failure detection (BFD) for one or more SCells that have been configured (for the beam failure detection). The failure detection procedure is similar to Release-15 PCell failure detection where, for each SCell that the failure detection is configured, the UE determines the respective set of beam failure detection resources (set of q0, beam failure detection-reference signal (BFD-RS)) implicitly or explicitly. In the implicit configuration, the UE determines the BFD-RS based on the reference signal (RS) indicated by the active transmission configuration index (TCI) states for PDCCH. In the explicit configuration, the UE performs BFD according to the RS configured by the network.

Physical layer (PHY)/layer 1 (LI) determines, based on the downlink (DL) RS (such as synchronization signal block (SSB)/channel state information (CSI)-RS) in set of q0 whether or not to indicate beam failure instance (BFI) to higher layer (e.g., medium access control (MAC) /layer 2 (L2)). When all the RS in the set of q0 are in failure condition, i.e., the hypothetical PDCCH block error rate (BLER) estimated on the RS is above a threshold value (Qout, e.g., 10%) the UE indicates the BFI to higher layer.

The MAC layer counts (BFI-counter) the BFI indications for each respective cell, and when it counts the configured number of BFI instances indicated by the lower layer for the respective cell (PCell/SCell) it initiates and/or triggers BFR. The counter for BFI indications may be supervised by a BFD timer. When the UE receives a new BFI indication, the BFD timer is started and the counter is incremented. If the BFD timer expires, the counter is reset.

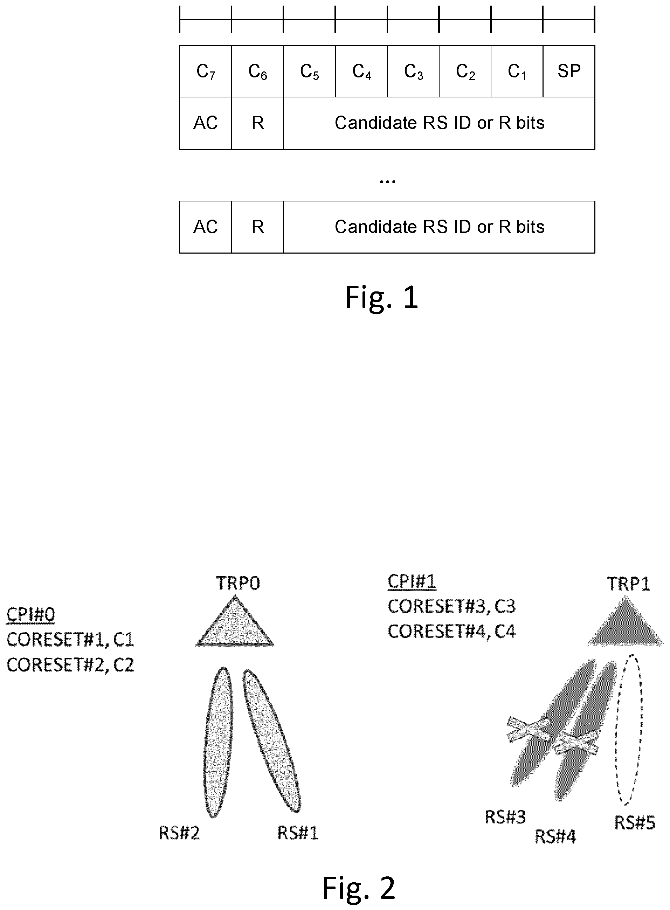

For the SCell BFR, when detecting beam failure on at least one SCell, the UE can indicate the failure and recover the failed cell using a MAC control element (CE), i.e., BFR MAC CE. The MAC CE indicates to the network the failed SCell index (C1-C7 bits), e.g., an indication of whether a candidate beam is available (AC) and the candidate beam index (Candidate RS ID, if any). The UE may indicate a candidate beam listed in the canditebeam-rs-list (e.g., a list of candidates beam indexes that are either SSB and/or CSI-RS indexes). The same MAC CE that can indicate SCell failure/recovery information may also be used for PCell recovery by setting the PCell bit to indicate the failure (SP bit). Fig. 1 illustrates an example BFR MAC CE with one octet $C_i$, which is similar to Figure 6.1.3.23-1 of 3GPP TS 38.321 V16.3.0.

The UE may be configured with a list of RS identifiers (ID) that can be used to indicate new candidate beam RS index for the failed SCell . Alternatively or additionally, the UE may multiplex the BFR MAC CE in an available uplink (UL) grant (e.g., see 3GPP TS 38.213).

In Release-17, it has been agreed to enhance the BFR procedure to cover the multi-TRP (M-TRP) operation. M-TRP operation may refer to an operation where the UE is served using one or more transmission points. Typically, M-TRP operation refers to single downlink control information (S-DCI) or multi-DCI (mDCI) operation. In mDCI operation, the control resource set (CORESET) pool index (CORESETPoolIndex) value is used to group CORESET under separate groups, i.e., when CORESETs share the same group ID or CORESETPoolIndex value they are considered to be in the same group. In a single DCI-based M-TRP operation, the different CORESETs are not grouped, where the CORESETPoolIndex value is not configured.

When configured with more than one value of CORESETPoolIndex (mDCI operation, e.g., 2 sets of CORESETs are configured), the UE may be expected to monitor DCI transmissions simultaneously from CORESETs associated with different pool index values. Currently, up to 2 values can be configured (k=0,1).

The current BFD procedure will be enhanced to cover the M-TRP operation. For example, it has been agreed, for M-TRP BFR, to provide support for 1-to-1 association between each BFD-RS set and a new beam indication (NBI) RS (NBI-RS) set. Additionally, with respect to a BFR request (BFRQ) response, it is expected to support at least the same gNB response as in Release-16 SCell BFR (i.e., DCI with toggled NDI scheduling a same hybrid automatic repeat request (HARQ) process ID as the PUSCH carrying BFRQ MAC-CE). For BFRQ of M-TRP BFR, an option is provide up to two dedicated PUCCH-SR resources in a cell group and possibly reuse the PUCCH-SR for SCell for M-TRP. Further, it is expected that BFRQ MAC-CE can convey information of failed component carrier (CC) indices, one new candidate beam for the failed TRP/CC if found, and whether a new candidate beam is found. As such, support will be provided for at least an indication of a single TRP failure (i.e. failure of a BFD-RS resource set), and possibly whether information of failed TRP(s) is conveyed in the MAC-CE and/or how to support the indication of more than one TRP failure, corresponding BFR procedure and applicable cell type (SCell v. SpCell). These agreements reflect the expectation that the M-TRP BFR would be using SCell BFR as a baseline, i.e., a UE can be configured with more than 1 BFD-RS sets per serving cell (likely up to 2).

Options for the beam failure recovery are currently being considered. As the M-TRP aspect enables a UE to determine when a specific TRP is considered to be failure or, more specifically, a UE can be configured with multiple sets of q0 (e.g., two sets) which enables beam failure detection per respective set of q0. The BFD-RS in the sets of q0 (q0_k, k = 0,1). Any of the methods or example embodiments described herein are not limited to a specific number of BFD-RS sets.

Fig. 2 illustrates an example of a M-TRP deployment, according to an embodiment. As illustrated in the example of Fig. 2, a UE can be configured to determine the failure of a subset of PDCCH TCI States that are configured in different sets. When a specific set, e.g., either K=0, or K=1 is in failure, the UE can perform TRP-specific recovery. In some cases, the UE may use the TRP that is not in the failure for recovery purposes, such as for BFR signalling (SR and or MAC CE). It should be understood that, although Fig. 2 depicts two TRPs with respective set of CORESETs, it may be possible to use multiple TRPs to transmit CORESETs under a specific CORESETPoolIndex. As an example the CORESET#1 and CORESET#2 may be transmitted on different TRPs but may be considered to be grouped/pooled based on the configured CORESETPoolIndex value.

For each TRP (i.e., the BFD-RS set), the network may configure a set of candidate beams NBI-RS set (or a set of qI). In other words, when a specific TRP (the BFD-RS set) fails, the UE determines the candidate availability out of a set of preconfigured candidates RS indexes.

Having a candidate RS list (NBI-RS set) follows somewhat the Release-16 SCell BFR, where a SCell configured with beam failure detection is provided with a candidate RS list. In case no candidate is available, i.e., the UE cannot detect any candidate RS index above an RSRP threshold, the UE may indicate the failure of the SCell and may indicate that no candidate is available in a MAC CE.

In Release-16 procedures, indicating that the candidate is not available for SCell had no further effect on the UE procedure. Any further actions after the UE indicated no candidates to the network was left for network implementation (as an example resource and reporting configuration for beam management).

Currently, for M-TRP BFR, it is unclear what the UE assumptions should be when it performs recovery, given the recovery mechanism and information provided to the network, e.g., when a specific failure type is declared and the UE has determined the candidate beam availability (i.e., candidate or no candidate). As will be discussed in detail below, certain example embodiments may address at least this issue, as well as other possible problems that are currently unaddressed.

It is noted that a *SearchSpace* information element (IE) defines how/where to search for PDCCH candidates. Each search space is associated with one *ControlResourceSet*. A *ControlResourceSet* IE is used to configure a time/frequency control resource set (CORESET) in which to search for downlink control information. A search space can be configured with parameters including duration, *monitoringSlotPeriodicityAndOffset,* search space type (configures the space as common search space (CSS) and DCI formats to monitor) and *monitoringSymbolsWithinSlot.* The duration parameter includes the number of consecutive slots that a *SearchSpace* lasts in every occasion, i.e., upon every period as given in the *periodicityAndOffset.* The *monitoringSlotPeriodicityAndOffset* parameter includes the slots for PDCCH Monitoring configured as periodicity and offset. The *monitoringSymbolsWithinSlot* parameter includes the first symbol(s) for PDCCH monitoring in the slots configured for PDCCH monitoring (see *monitoringSlotPeriodicityAndOffset* and *duration).*

It is noted that, as used herein, the term "TRP" is intended to refer to the BFD-RS set associated with one or more specific TRPs, and TRP specific failure refers to failure of a specific beam failure detection resource (q0) set. For purposes of simplicity, 2 TRPs (2 BFD-RS sets of q0) are assumed. As noted earlier in Fig. 2, the number of TRPs is merely an example. However, example embodiments are not limited to this number. A UE may be configured to monitor multiple BFD-RS sets in s-DCI / mDCI scenario.

Certain embodiments are described in the following with reference to the example of Fig. 2. In an embodiment, a UE may determine that TRP# (the BFD-RS resource set / q0_trp# associated with TRP#, #=0,1) has failed and may indicate to the network that a new candidate beam is not available. For instance, in the example of Fig. 2, the UE may determine that TRP1 has failed. As an example, when discussed herein that a TRP#1 has failed, this may refer to the failure of RSs in the BFD-RS set associated with the TRP#1. In other words, according to certain embodiments, the TPR#1 failure may refer to the failure of BFD-RS set associated with the CORESETs under specific CORESETpoolIndex values (e.g. #1). This could apply similarly for TRP#0. According to some embodiments, when the UE has determined that TRP# (e.g., TRP1 or TRP0 in the example of Fig. 2) has failed and indicated to the network that new candidate beam is not available, the UE may determine that it is not required to monitor PDCCH on CORESETs under the failed TRP, e.g., CORESETs under the specific CORESETpoolindex, CPI#. For instance, in the example of Fig. 2, the UE may determine that it is not required to monitor PDCCH under CPI#1.

According to some embodiments, when the UE has determined that TRP# (e.g., TRP1 or TRP0 in the example of Fig. 2) has failed and indicated to the network that new candidate beam is available and prior to the network activating a TCI State for at least one CORESET under the failed CORESETPoolIndex, the UE may determine that it is not required to monitor PDCCH on CORESETs under the failed TRP, e.g., CORESETs under the specific CORESETpoolindex, CPI#. For instance, in the example of Fig. 2, the UE may determine that it is not required to monitor PDCCH under CPI#1.

In certain embodiments, the failure of a CORESETpoolIndex may refer to the failure of the BFD-RS set associated with the CORESETPoolIndex value (e.g. K=0,1...). The RS to be included in the BFD-RS set for a CORESETPoolIndex may be determined based on the DL RS indicated by the active TCI States for the CORESETs under the CORESETPoolIndex value.

In certain embodiments, in any of the examples discussed herein, a UE is not required to monitor the SS of the failed CORESETs associated with the failed TRP/CORESETPoolIndex. In some examples, a UE may consider the SS to be active but is not required to monitor the SS until new TCI State is provided at least one of the CORESETs.

In one or more of the example embodiments discussed herein, a UE may determine the availability of a candidate beam based on the evaluation of the candidate beams within a time period.

In one or more of the example embodiments discussed herein, the RS may be included in the respective BFD-RS sets based on any higher layer parameter or other means. As an example, the BFD-RS may be included in the sets based on the CORESETPoolIndex value(s) associated with one or more CORESET(s). As an alternative to a CORESETPoolIndex value, any other implicit/explicit parameter may be used to determine how the RS are included in the respective BFD-RS sets.

In certain embodiments, the UE may consider that the search space (SS) configurations of the CORESETs under the failed CORESETpoolindex (e.g. CPI#1 in the example of Fig. 2) are inactivated, deactivated and/or suspended. When the SS of the CORESETs are inactive/deactivated/suspended, the UE is not required to monitor PDCCH transmissions scheduled from the CORESETs associated with the failed CPI#. Additionally or alternatively, at least one of the SS parameters may be adapted, i.e., an alternative preconfigured value can be assumed for at least one SS parameter. In some examples the SS configuration/parameters or configurations associated with at least one CORESET under the failed CORESETPoolIndex may have alternative value. SS parameters/configurations may comprise of one or more *Duration, monitoringSlotPeriodicityAndOffset, monitoringSymbolsWithinSlot* and DCI formats. The alternative value(s) may be predetermined by network, i.e., network may configure UE with one or more sets of SS parameters. In some examples, the SS parameters may comprise of one or more sets of DCI formats. A UE may assume monitoring of alternative DCI format or set of DCI formats for at least one SS for at least one CORESET under the failed CORESETPoolIndex.

As the UE is not monitoring PDCCH from the failed CPI#, if the failed TRP is associated with a serving cell, the multi-TRP supported serving cell may be considered as a single TRP (or an S-DCI) supported serving cell. If the failed TRP is associated with all serving cells, a *BDFactor* ($\gamma$) configured to the UE may be assumed as 1, where all serving cells are considered equivalent to single TRP (or an S-DCI) supported serving cells. If needed, the network may use additional serving cells towards the UE within the maximum limits of supported blind decoding (BD) and control channel elements (CCEs). In one embodiment, the total limits for BD/CCE numbers across configured CCs may be calculated the same as

$$N_{cells}^{cap}$$

or similar to that of Release-15 based on $N_{cells}^{cap}$ as described in 3GPP TS38.213. In another embodiment, the total limits for BD/CCE numbers across configured CCs may be adjusted where the UE may have a reduced total limit for BD/CCE numbers across CCs than the limit

$$N_{cells}^{cap}$$

based on Release-15 based on $N_{cells}^{cap}$ as described in 3GPP TS38.213. According to some embodiments, further changes to the maximum numbers of monitored PDCCH candidates and non-overlapped CCEs per slot for total limits (from those defined in 3GPP TS38.213) may be applied as the serving cell(s) are no longer considered as multi-TRP supported serving cell(s) which otherwise increases numbers in $\gamma$ times than single TRP serving cells.

According to a further embodiment, the SS configurations may be considered to be deactivated/suspended/inactive (or active with alternative set of parameters) for the CORESETs under failed CPI# until the UE receives activation of at least one TCI state (for PDCCH) for at least one CORESET associated with the failed CPI#. When the network activates at least one TCI state for the CORESET, the UE may determine that the SS for at least the CORESET associated with the failed CPI# are activated/resumed/(switched back to the previous configuration). Once the SS are activated, the UE resumes the DCI monitoring on the CORESET according to the SS configuration.

In some embodiments, when the network activates at least one TCI state for at least one CORESET under the failed CPI#, the UE may assume the RS indicated by the TCI state as quasi-co-location (QCL) assumption (e.g., typeD) for the PDCCH reception on other CORESETs under that CPI#. Additionally or alternatively, the CORESETs that where not indicated with (new) active TCI state after failure, may still be considered to have the SS deactivated/suspended. In one alternative, the CORESETs that were not indicated with (new) active TCI state after failure, may still be considered to have the SS monitored with an alternative set of parameters (e.g. specific DCI formats, common/UE specific search space with associated DCI formats).

According an example embodiment, the UE does not transmit periodic feedback/beam reporting/PUCCH/PUSCH or does not perform UL activity (UL-SCH) associated with the failed TRP. In one embodiment, just access via random access channel (RACH) is allowed to the failed TRP in UL.

According to a further embodiment, when a UE has determined that TRP# has failed, the UE may assume the TCI state for PDCCH reception to be deactivated/suspended, i.e., a CORESET is considered to have no active TCI state for PDCCH which causes the UE to assume that the SS(s) for the CORESET(s) are not active, or that the UE is not required to monitor the PDCCH.

In one embodiment, the non-failed TRP may be prioritized (i.e., the SSs configured for the CORESETs of CPI# that was not in failure are prioritized) in case of overbooking/overlapping transmissions. For example, overbooking may also be applicable to USS sets associated with the CORESET(s) that are configured with CORESETPoolIndex =1 when CORESETPoolIndex = 0 is the failed TRP. According to one example, the SS deactivation/TCI state deactivation assumption does not affect *CORESET#0.*

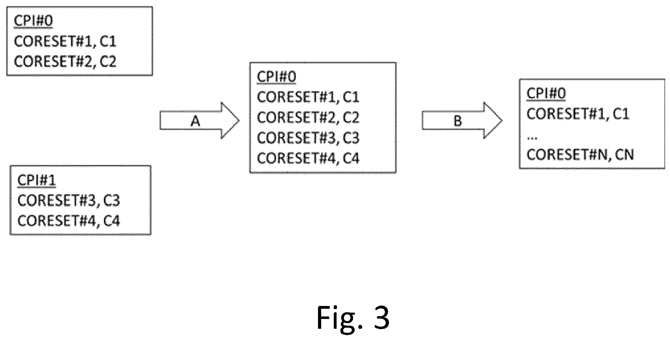

In one embodiment, the UE may assume that all the CORESETs under the failed CPI# are deconfigured/reconfigured under the same pool index with certain rules. In a further example embodiment, when a TRP# fails and the UE has indicated that no new candidate has been found, the UE may assume that all (at least one) the CORESETs under the failed CPI# are deconfigured/reconfigured under the same or single CORESETPoolIndex value. The configuration of CORESETs to the same or single CORESETPoolIndex value may be based on a certain rules or rule set. Fig. 3 illustrates an example diagram of the reconfiguration of CORESETs, according to certain embodiments. As illustrated in the example of Fig. 3, at option A, regardless of which TRP did fail, the UE may assume all the CORESET under the same CORESETPoolIndex#0. In one option, the CORESETs that were previously under TRP#/CPI# that failed are now under CPI# that has not failed and UE assumes that the SS of the CORESETs under previously failed TRP#CPI# are now deactivated. In one embodiment, after option A, the UE may proceed to option B. According to an embodiment, at option B, the UE may determine to include the CORESETs under the failed CPI# to the non-failed CPI# in ascending/descending order so that up to maximum number (N) of CORESETs with active TCI States are under the CPI#. In this case, the UE may assume the DL RS for PDCCH reception according to a CORESET in the non-failed CPI# with lowest/highest index. According to an embodiment, the CORESET is not monitored for PDCCH until activated with a TCI state. In one embodiment, the CORESET may assume a default TCI State. In one embodiment, the CORESET (of the failed CPI#) that is included to the other CORESET pool index (e.g. the one that has not failed) UE may assume the PDCCH monitoring, i.e., assume the PDCCCH DM-RS to be QCL'd with the DL RS indicated by a TCI State of another CORESET.

In a one embodiment, when both TRPs (e.g. TRP0 and TRP1 of the serving cell with their respective BFD-RS sets) fail and the UE determines that no new candidate is available for either (or for all) of the failed TRPs, the UE may assume single TRP operation for the cell, i.e., consider a M-TRP supported serving cell as a single TRP supported serving cell after beam failure recovery. As a further example, when a UE has determined to trigger beam failure recovery for the failed TRPs when no new candidates are available for either of the TRPs, the UE may after successful provision of this information, assume the single TRP operation mode and/or consider the cell as single TRP supported serving cell. In one example, the single TRP supported serving cell or single TRP operation mode may mean that the UE assumes the CORESETs under the CORESETPoolIndex value 0 (or 1) to be providing PDCCH according to the configuration. In another example, the UE may assume that a serving cell may be a SpCell or an SCell.

In one embodiment, PCell/SpCell behaviour may be specified differently than SCell behaviour in the case of TRP failure. According to certain embodiments, any of the described methods described herein may also be applicable the inter-cell (M-TRP) operation. In one further embodiment, the monitoring of PDCCH on CORESETs associated with TRP1 may be provided by a non-serving cell.

In one embodiment, the failed CORESETPoolIndex (CPI) may refer to the declared beam failure based on the BFD-RS (q0_TRP1) associated with the CORESETs under the CORESETPoolIndex (CPI). According to certain embodiments, when a UE has been configured with more than Nmax CORESETs (e.g., M=1,2,3..) with active TCI states and UE performs the monitoring of just Mmax BFD-RS (e.g., M=1,2,3..), the UE may continue monitoring PDCCH on the CORESET that was not monitored for failure.

In a further embodiment, when a UE has been configured with more than Nmax CORESETs with active TCI states and the UE performs the monitoring of just Mmax BFD-RS, it is assumed that the UE keeps monitoring PDCCH with assumption of the RS indicated by the active TCI state that was not monitored for failure. As an example, a UE may be configured 3 CORESETs (C#3,C#4 and C#5) but the Mmax (2) limits the monitoring of up to 2 BFD-RS resulting in monitoring the RS indicated by active TCI states for 2 CORESETs (e.g., C3,C4). In this case, the UE may monitor C5 for any DCI transmission and the network may determine based on UE feedback which of the 2 CORESETs are monitored.

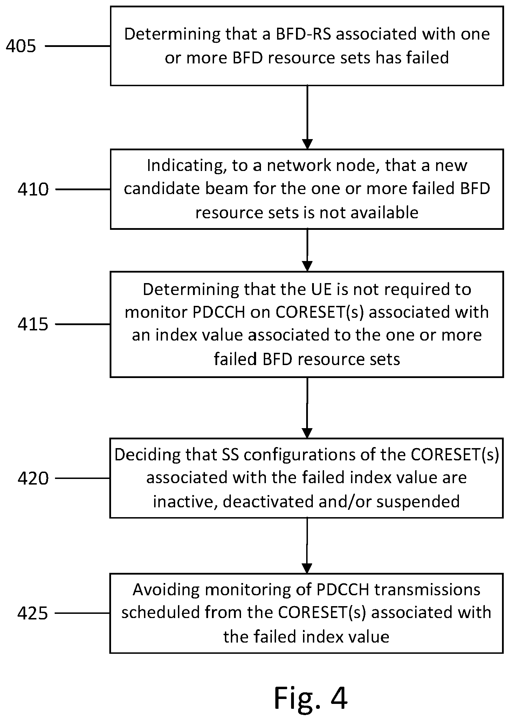

Fig. 4 illustrates an example flow diagram of a method for M-TRP operation after BFR, according to one embodiment. In certain example embodiments, the flow diagram of Fig. 4 may be performed by a network entity or network node in a communications system, such as LTE or 5G NR. In some example embodiments, the network entity performing the method of Fig. 4 may include or be included in UE, communication node, mobile equipment (ME), mobile station, mobile device, stationary device, IoT device, or other device.

As illustrated in the example of Fig. 4, the method may include, at 405, determining that a BFD-RS(s) associated with one or more BFD resource sets has failed. According to an embodiment, the BFD resource set(s) may be associated with a set of one or more TRPs. In other words, the determining 405 may include determining that the BFD-RS resource set (q0) associated with one or more TRPs has failed. According to some embodiments, the method may optionally include, at 410, indicating, to a network node (e.g., gNB), that a new candidate beam for the one or more failed BFD resource sets or TRPs is not available.

In an embodiment, as illustrated in the example of Fig. 4, the method may include, at 415, determining that the UE is not required to monitor a channel (e.g., PDCCH) on at least one CORESET associated with an index value (e.g., failed CPI value) that is further associated with the one or more failed BFD resource sets. According to certain embodiments, the index value may include a higher layer index, a CPI, and/or other index that groups or separates CORESETs and relates them to BFD resource sets. As such, in one embodiment, the BFD resource set(s) may be associated with one or more of the higher layer index, the CPI, and/or the other index that groups or separates CORESETs.

In one embodiment, the method of Fig. 4 may include, at 420, deciding or determining that SS configurations of the at least one CORESET associated with the failed index value are at least one of inactive, deactivated and/or suspended. When the SS configurations of the at least one CORESET are in the inactive, deactivated or suspended state, the method may include, at 425, avoiding monitoring (i.e., not monitoring) of PDCCH transmissions scheduled from the at least one CORESET associated with the failed index value. Additionally or alternatively, although not illustrated in the example of Fig. 4, the method may include determining or receiving an alternative preconfigured value for at least one parameter of the SS configurations.

According to certain embodiments, while the UE is not monitoring the PDCCH transmissions scheduled from the at least one CORESET associated with the failed index value, the method may include, when the one or more failed BFD resource sets is associated with a serving cell of the UE, considering a M-TRP supported serving cell as a single TRP supported serving cell. When the one or more failed BFD resource sets is associated with all serving cells of the UE, then the configured BDFactor ($\gamma$) may be assumed as 1, and the method may include considering the serving cells to be single TRP supported serving cells. In one embodiment, the total limits for BD/CCE numbers across configured CCs may be calculated the same as that in Release-15 based on $N_{cells}^{cap}$ or the total limits for BD/CCE numbers across configured CCs may be adjusted where the UE may have a reduced total limit for BD/CCE numbers across CCs than the limit based on Rel. 15 based on $N_{cells}^{cap}$, as described in 3GPP TS38.213.

In some embodiments, the method may include receiving activation of at least one TCI state for one or more of the at least one CORESET associated with the failed index value. Based on the activation of the at least one TCI state for the at least one CORESET, the method may include determining that the SS configurations for the at least one CORESET are activated and resuming DCI monitoring on the at least one CORESET according to the SS configurations.

According to certain embodiments, when the at least one TCI state is activated for one or more of the at least one CORESET, assuming the RS indicated by the at least one TCI state as a QCL assumption for the PDCCH reception on one or more other CORESETs associated with the index value. In some embodiments, when one or more CORESETs associated with the failed CPI value do not receive activation of at least one TCI, determining that the SS configurations for the one or more CORESETs are still deactivated or suspended.

In some embodiments, the method may include avoiding transmission of periodic feedback/beam reporting/PUCCH/PUSCH or avoiding performing of UL activity (UL-SCH) associated with the failed BFD resource set(s). In one embodiment, just access via RACH may be allowed to the failed BFD resource set(s) in UL.

According to certain embodiments, in case of overbooking or overlapping of transmissions, the method may include prioritizing the SS configurations for CORESETs associated with an index value that is not in failure. As one example, overbooking may also be applicable to USS sets associated with the CORESET(s) that are configured with an index value of 1 if an index value of 0 is the failed TRP.

In some embodiments, the method may include determining to include one or more CORESETs associated with the failed index value to a non-failed index value in ascending or descending order so that up to a maximum number of CORESETs with active TCI states are under the non-failed index value. As mentioned above, the index value may include one or more of a higher layer index value, a CPI value, or other index value configured to separate CORESETs into groups and relates them to BFD resource sets.

It is noted that Fig. 4 is provided as one example method. Other examples are possible according to some embodiments, and Fig. 4 may include one or more additional aspects described above or elsewhere herein.

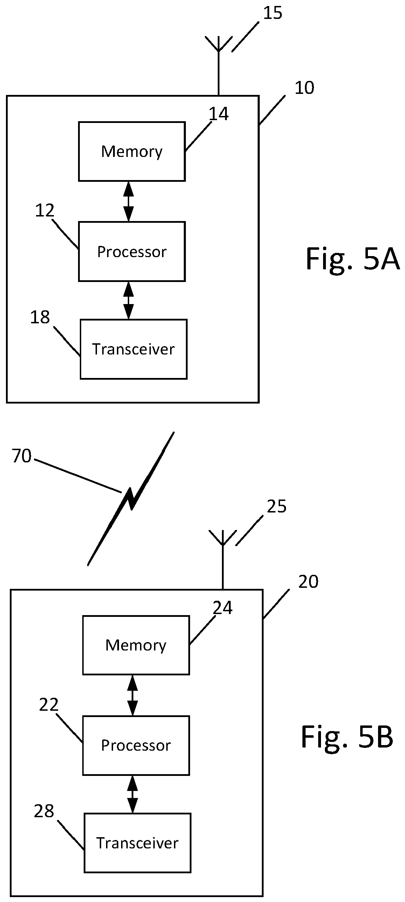

Fig. 5A illustrates an example of an apparatus 10 according to an embodiment. In an embodiment, apparatus 10 may be a node, host, or server in a communications network or serving such a network. For example, apparatus 10 may be a network node, a sensing node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be gNB or other similar radio node, for instance.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 5A.

As illustrated in the example of Fig. 5A, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in Fig. 5A, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication or communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductorbased memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (via an uplink, for example).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network element or RAN node, such as a base station, access point, Node B, eNB, gNB, TRP, HAPS, IAB node, WLAN access point, or the like. In one example embodiment, apparatus 10 may be a gNB or other radio node. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in Fig. 4, or any other method or procedure described herein. In some embodiments, as discussed herein, apparatus 10 may be configured to perform a procedure relating to M-TRP operation after BFR, as discussed elsewhere herein, for example.

For instance, according to an embodiment, apparatus 10 may be controlled by memory 14 and processor 12 to receive an indication from a UE that a new candidate beam for one or more failed TRPs is not available. In some embodiments, apparatus 10 may be controlled by memory 14 and processor 12 to transmit, to the UE, an activation of at least one TCI state (for PDCCH) for one or more CORESETs associated with the failed TRP(s).

Fig. 5B illustrates an example of an apparatus 20 according to another embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 5B.

As illustrated in the example of Fig. 5B, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 5B, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductorbased memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, SL UE, relay UE, mobile device, mobile station, ME, IoT device and/or NB-IoT device, or the like, for example. According to certain embodiments, apparatus 20 may be controlled by memory 24 and processor 22 to perform the functions associated with any of the embodiments described herein, such as one or more of the operations illustrated in, or described with respect to, Fig. 4, or any other method or procedure described herein. For example, in an embodiment, apparatus 20 may be controlled to perform a process relating to M-TRP operation after BFR, as described in detail elsewhere herein.

For example, in an embodiment, apparatus 20 may be controlled by memory 24 and processor 22 to determine that a BFD-RS(s) associated with one or more BFD resource sets has failed. According to an embodiment, the BFD resource set(s) may be associated with a set of one or more TRPs. In other words, apparatus 20 may be controlled to determine that the BFD-RS resource set (q0) associated with one or more TRPs has failed. According to some embodiments, apparatus 20 may be controlled by memory 24 and processor 22 to indicate, to a network node (e.g., gNB), that a new candidate beam for the one or more failed BFD resource sets or TRPs is not available.

In an embodiment, apparatus 20 may be controlled by memory 24 and processor 22 to determine that the apparatus 20 is not required to monitor a channel (e.g., PDCCH) on at least one CORESET associated with an index value (e.g., failed CPI value) that is further associated with the one or more failed BFD resource sets. As discussed above, according to certain embodiments, the index may include a higher layer index, a CPI, and/or other index that groups or separates CORESETs and relates them to BFD resource sets. As such, in one embodiment, the BFD resource set(s) may be associated with one or more of the higher layer index, the CPI, and/or the other index that groups or separates CORESETs.

In one embodiment, apparatus 20 may be controlled by memory 24 and processor 22 to decide or determine that SS configurations of the at least one CORESET associated with the failed index value are inactive, deactivated and/or suspended. When the SS configurations of the at least one CORESET are in the inactive, deactivated or suspended state, apparatus 20 may be controlled by memory 24 and processor 22 to avoid the monitoring (i.e., not monitoring) of PDCCH transmissions scheduled from the at least one CORESET associated with the failed index value. Additionally or alternatively, apparatus 20 may be controlled by memory 24 and processor 22 to determine or receive an alternative preconfigured value for at least one parameter of the SS configurations.

According to certain embodiments, while the apparatus 20 is not monitoring the PDCCH transmissions scheduled from the at least one CORESET associated with the failed index value, apparatus 20 may be controlled by memory 24 and processor 22 to, when the one or more failed BFD resource sets is associated with a serving cell of the apparatus 20, consider a M-TRP supported serving cell as a single TRP supported serving cell. When the one or more failed BFD resource sets is associated with all serving cells of the apparatus 20, then the configured BDFactor ($\gamma$) may be assumed as 1, and apparatus 20 may be controlled by memory 24 and processor 22 to consider the serving cells to be single TRP supported serving cells.

In some embodiments, apparatus 20 may be controlled by memory 24 and processor 22 to receive activation of at least one TCI state for one or more of the at least one CORESET associated with the failed index value. Based on the activation of the at least one TCI state for the at least one CORESET, apparatus 20 may be controlled by memory 24 and processor 22 to determine that the SS configurations for the at least one CORESET are activated and to resume DCI monitoring on the at least one CORESET according to the SS configurations.

According to certain embodiments, when the at least one TCI state is activated for one or more of the at least one CORESET, apparatus 20 may be controlled by memory 24 and processor 22 to assume or determine the RS indicated by the at least one TCI state as a QCL assumption for the PDCCH reception on one or more other CORESETs associated with the index value. In some embodiments, when one or more CORESETs associated with the failed index value do not receive activation of at least one TCI, apparatus 20 may be controlled by memory 24 and processor 22 to determine that the SS configurations for the one or more CORESETs are still deactivated or suspended.

In some embodiments, apparatus 20 may be controlled by memory 24 and processor 22 to avoid transmission of periodic feedback/beam reporting/PUCCH/PUSCH or avoid performing of UL activity (UL-SCH) associated with the failed BFD resource set(s). In one embodiment, just access via RACH may be allowed to the failed BFD resource set(s) in UL.

According to certain embodiments, in case of overbooking or overlapping of transmissions, apparatus 20 may be controlled by memory 24 and processor 22 to prioritize the SS configurations for CORESETs associated with an index value that is not in failure. As one example, overbooking may also be applicable to USS sets associated with the CORESET(s) that are configured with an index value of 1 if an index value of 0 is the failed BFD resource set or TRP.

In some embodiments, apparatus 20 may be controlled by memory 24 and processor 22 to determine to include one or more CORESETs associated with the failed index value to a non-failed index value in ascending or descending order so that up to a maximum number of CORESETs with active TCI states are under the non-failed index value.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, displays, and/or computer program code for causing the performance of any of the operations described herein.

In view of the foregoing, certain example embodiments provide several technological improvements, enhancements, and/or advantages over existing technological processes and constitute an improvement at least to the technological field of wireless network control and/or management. For example, as discussed in detail above, certain embodiments provide an approach for M-TRP operation after BFR. As such, some example embodiments may improve reliability and robustness of channels, such as PDCCH, PUSCH and PUCCH, using multi-TRP and/or multi-panel. Accordingly, the use of certain example embodiments results in improved functioning of communications networks and their nodes, such as base stations, eNBs, gNBs, and/or IoT devices, UEs or mobile stations. In one example, some benefits may include the UE power saving due to reduced monitoring of PDCCH upon failure, network resource savings (spatial and time/frequency) and reduced UE complexity during and upon failure recovery.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

**Claims**

1. A method, comprising:

   determining, by a user equipment, that one or more beam failure detection resource sets have failed due to a failed beam failure detection reference signal or signals associated with the one or more beam failure detection resource sets;
   determining, by the user equipment, that it is not required to monitor a channel on at least one control resource set associated with a failed index value that is further associated with the one or more failed beam failure detection resource sets.

**2.** An apparatus, comprising:

means for determining that one or more beam failure detection resource sets have failed due to a failed beam failure detection reference signal or signals associated with the one or more beam failure detection resource sets;
means for determining that the apparatus is not required to monitor a channel on at least one control resource set associated with a failed index value that is further associated with the one or more failed beam failure detection resource sets.

**3.** The apparatus of claim 2, wherein the beam failure detection resource set is associated with a set of one or more transmission reception points.

**4.** The apparatus of claim 2 or 3, wherein the index comprises at least one of:

a higher layer index,
a control resource set pool index, or
other index that groups control resource sets and relates them to the beam failure detection resource sets.

**5.** The apparatus of claim 4, wherein the beam failure detection resource set is associated with at least one of the higher layer index, the control resource set pool index, or the other index that groups control resource sets.

**6.** The apparatus of any one of claims 2-5, further comprising:
means for indicating, to a network node, that a new candidate beam for the one or more failed beam failure detection resource sets is not available.

**7.** The apparatus of any one of claims 2-6, further comprising:

means for deciding that search space configurations of the at least one control resource set associated with the failed index value are at least one of inactive, deactivated, or suspended; and
when the search space configurations of the at least one control resource set are in the inactive, deactivated, or suspended state, means for avoiding monitoring of physical downlink control channel transmissions scheduled from the at least one control resource set associated with the failed index value.

**8.** The apparatus of claim 7, further comprising:
means for determining or receiving an alternative preconfigured value for at least one parameter of the search space configurations.

**9.** The apparatus of claim 7, wherein, while the apparatus is not monitoring the physical downlink control channel transmissions scheduled from the at least one control resource set associated with the failed index value, further comprising:

means for considering a multiple transmission-reception point supported serving cell as a single transmission-reception point supported serving cell when the one or more failed beam failure detection resource sets is associated with a serving cell of the apparatus; and
means for considering the cells to be single transmission-reception point supported serving cells when the one or more failed beam failure detection resource sets is associated with all serving cells of the apparatus.

**10.** The apparatus of claim 7, further comprising:

means for receiving activation of at least one transmission configuration index state for one or more of the at least one control resource set associated with the failed index value; and
means for determining that the search space configurations for the at least one control resource set are activated based on the activation of the at least one transmission configuration index state for the at least one control resource set; and
means for resuming downlink control information monitoring on the at least one control resource set according to the search space configurations.

**11.** The apparatus of claim 10, when the at least one transmission configuration index state is activated for one or more of the at least one control resource set, further comprising:
means for assuming the reference signal indicated by the at least one transmission configuration index state as a quasi-co-location assumption for the physical downlink control channel reception on one or more other control resource sets associated with the index value.

**12.** The apparatus of claim 7, when one or more control resource sets associated with the failed index value do not receive activation of at least one transmission configuration index, further comprising:
means for determining that the search space configurations for the one or more control resource sets are still deactivated or suspended.

**13.** The apparatus of claim 7, in case of overbooking or overlapping of transmissions, further comprising:
means for prioritizing the search space configurations for control resource sets associated with an index value that is not in failure.

14. The apparatus of claim 7, further comprising:
means for determining to include one or more of control resource sets associated with the failed index value to a non-failed index value in ascending or descending order so that up to a maximum number of control resource sets with active transmission configuration index states are under the non-failed index value.

15. A non-transitory computer readable medium comprising program instructions for causing an apparatus to perform at least the following:

determining that one or more beam failure detection resource sets have failed due to a failed beam failure detection reference signal or signals associated with the one or more beam failure detection resource sets; and
determining that the apparatus is not required to monitor a channel on at least one control resource set associated with a failed index value that is further associated with the one or more failed beam failure detection resource sets.

| $C_7$ | $C_6$ | $C_5$ | $C_4$ | $C_3$ | $C_2$ | $C_1$ | SP |
|-------|-------|-------|-------|-------|-------|-------|-----|
| AC | R | Candidate RS ID or R bits | | | | | |

...

| AC | R | Candidate RS ID or R bits |
|----|---|---------------------------|

# Fig. 1

CPI#0
CORESET#1, C1
CORESET#2, C2

TRP0

RS#2          RS#1

CPI#1
CORESET#3, C3
CORESET#4, C4

TRP1

RS#3
RS#4          RS#5

# Fig. 2

CPI#0
CORESET#1, C1
CORESET#2, C2

CPI#1
CORESET#3, C3
CORESET#4, C4

A →

CPI#0
CORESET#1, C1
CORESET#2, C2
CORESET#3, C3
CORESET#4, C4

B →

CPI#0
CORESET#1, C1
...
CORESET#N, CN

# Fig. 3

405 — Determining that a BFD-RS associated with one or more BFD resource sets has failed

410 — Indicating, to a network node, that a new candidate beam for the one or more failed BFD resource sets is not available

415 — Determining that the UE is not required to monitor PDCCH on CORESET(s) associated with an index value associated to the one or more failed BFD resource sets

420 — Deciding that SS configurations of the CORESET(s) associated with the failed index value are inactive, deactivated and/or suspended

425 — Avoiding monitoring of PDCCH transmissions scheduled from the CORESET(s) associated with the failed index value

Fig. 4

15

14

10

Memory

12

Processor

18

Transceiver

Fig. 5A

70

25

24

20

Memory

22

Processor

28

Transceiver

Fig. 5B

Europäisches
Patentamt

European
Patent Office

Office européen
des brevets

## EUROPEAN SEARCH REPORT

**Application Number**

EP 22 15 7467

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/350972 A1 (YI YUNJUNG [US] ET AL) 5 November 2020 (2020-11-05) | 1-5, 7-13,15 | INV. H04B7/022 |
| Y | * paragraphs [0344], [0381] – [0390], [0415] – [0424], [0436], [0451], [0455] * | 6,14 | H04B7/06 H04B7/08 H04L5/00 H04W72/12 H04W76/19 |
| | ----- | | |
| X | SAMSUNG: "Enhancements on beam management for multi-TRP", 3GPP DRAFT; R1-2008151, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20201026 – 20201113 23 October 2020 (2020-10-23), XP051945334, Retrieved from the Internet: URL:https://ftp.3gpp.org/tsg_ran/WG1_RL1/TSGR1_103-e/Docs/R1-2008151.zip [retrieved on 2020-10-23] | 1-5,15 | |
| Y | * Section 2.2 * | 6 | TECHNICAL FIELDS SEARCHED (IPC) |
| | ----- | | H04B H04W H04L |
| Y | WO 2019/215381 A1 (NOKIA TECHNOLOGIES OY [FI]) 14 November 2019 (2019-11-14) * page 15, lines 1-3 * | 6 | |
| | ----- | | |
| | -/-- | | |

The present search report has been drawn up for all claims

| Place of search | Date of completion of the search | Examiner |
|---|---|---|
| Munich | 20 July 2022 | Ganis, Alexander |

EPO FORM 1503 03.82 (P04C01)

Europäisches
Patentamt

European
Patent Office

Office européen
des brevets

## EUROPEAN SEARCH REPORT

Application Number

EP 22 15 7467

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NOKIA ET AL: "Enhancements on Beam Management for Multi-TRP/Panel Transmission", 3GPP DRAFT; R1-2101008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e Meeting; 20210125 - 20210205 18 January 2021 (2021-01-18), XP051970596, Retrieved from the Internet: URL:https://ftp.3gpp.org/tsg_ran/WG1_RL1/TSGR1_104-e/Docs/R1-2101008.zip [retrieved on 2021-01-18] * Section 3.1 and Section 3.3 * ----- | 14 | |

TECHNICAL FIELDS SEARCHED (IPC)

The present search report has been drawn up for all claims

| Place of search | Date of completion of the search | Examiner |
|---|---|---|
| Munich | 20 July 2022 | Ganis, Alexander |

## ANNEX TO THE EUROPEAN SEARCH REPORT
## ON EUROPEAN PATENT APPLICATION NO.

EP 22 15 7467

20-07-2022

| Patent document cited in search report | Publication date | Patent family member(s) | Publication date |
|---|---|---|---|
| US 2020350972 A1 | 05-11-2020 | NONE | |
| WO 2019215381 A1 | 14-11-2019 | CN 112119672 A | 22-12-2020 |
| | | EP 3791680 A1 | 17-03-2021 |
| | | JP 2021521750 A | 26-08-2021 |
| | | JP 2022058854 A | 12-04-2022 |
| | | JP 2022058855 A | 12-04-2022 |
| | | KR 20210008395 A | 21-01-2021 |
| | | US 2021258062 A1 | 19-08-2021 |
| | | WO 2019215381 A1 | 14-11-2019 |

EPO FORM P0459